Europäisches Patentamt

European Patent Office

Office européen des brevets

(11) Publication number: **0 197 009**
**A1**

## (12) EUROPEAN PATENT APPLICATION

(21) Application number: **86830057.5**

(22) Date of filing: **11.03.86**

(51) Int. Cl.⁴: **A 47 J 19/02**

(30) Priority: **04.04.85 IT 2133085 U**

(43) Date of publication of application:
**08.10.86 Bulletin 86/41**

(84) Designated Contracting States:
**AT BE CH DE FR GB LI NL SE**

(71) Applicant: **PLASTIGROUP S.r.l.**
**Via Stelvio, 5/7**
**I-27010 Siziano (Pavia)(IT)**

(72) Inventor: **Masto, Giorgio**
**Via De Notaris, 24**
**I-20100 - Milano(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) A device for use in squeezing citrus fruit.

(57) A citrus fruit squeezer comprises a tubular body having a first body portion (1) joined by an annular radial shoulder (10) to a larger second cylindrical body portion (1'). The radial annular shoulder (10) constitutes an abutment stop for a helical element (6) which coaxially surrounds the first cylindrical body portion (1) of the tubular body. The helical element (6) is free to slide along the first cylindrical body portion (1) between end positions determined, at one end, by its abutment with the radial annular shoulder (10) and at the other by fixing screws (7) which pass loosely through holes (8) in the radial annular shoulder (10) and are threadedly engaged in holes (9) in the helical element (6). The heads of the screws (7) are larger than the holes (8) in the annular shoulder (10), however, so that displacement of the helical element (6) axially away from the annular shoulder (10) is limited by contact of the heads of the screws (7) with the remote face of the annular shoulder (10).

Fig. 1

EP 0 197 009 A1

"A Device for use in squeezing citrus fruit"

The present invention relates to a device for use in squeezing citrus fruit, and which can also be used to remove the cores from apples or other fruit.

As is known, conventional citrus fuit squeezers, both those intended to be operated manually and those which are mechanised, are able to effect squeezing only of fruit which has been preliminarily cut in half. This requirement obviously involves the necessity of having available a second instrument by means of which the citrus fruit can be cut in half; normally this would be a knife or other sharp bladed implement.

The present invention seeks to provide a citrus fruit squeezer by means of which citrus fruit can be squeezed in an extremely simple manner to remove substantially all of the juice without the necessity for any preliminary preparation such as cutting into two parts.

According to the present invention, there is provided a citrus fruit squeezer, characterised by the fact that it comprises a tubular body having a first cylindrical body portion with apertures in the side wall thereof, a second cylindrical body portion, and a helical element surrounding the said first body portion and slidable therealong between predetermined end positions defining the length of available movement of the helical element along the first body portion. One advantage of the present invention is that it provides a citrus fruit squeezer which is structurally simple and therefore of low cost.

- 2 -

Another advantage of the present invention is that it provides a citrus fruit squeezer which in use allows the juice squeezed out to be collected directly in a glass or other similar receptacle.

One embodiment of the present invention will now be more particularly described, by way of example, with reference to the accompanying drawings, in which:

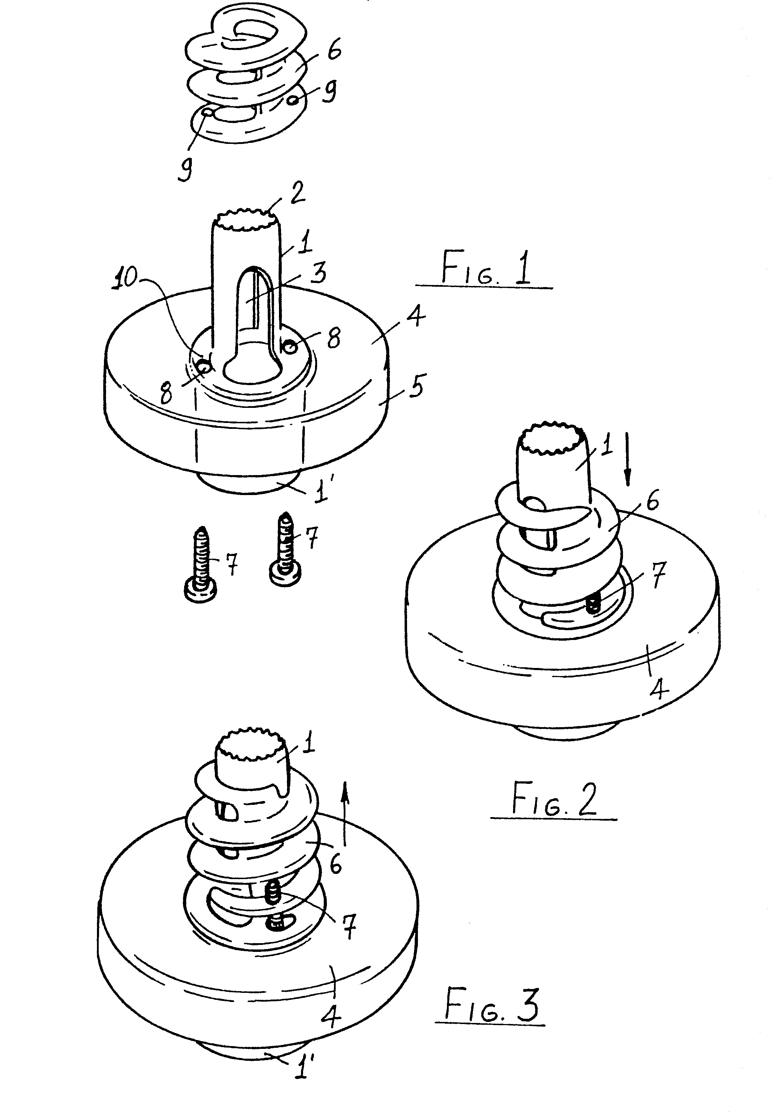

Figure 1 is an exploded view of a citrus fruit squeezer formed as an embodiment of the invention;

Figure 2 is an assembled view of the citrus fruit squeezer of Figure 1, shown in a first moulding position; and

Figure 3 is a similar perspective view of the citrus fruit squeezer of Figures 1 and 2, shown in a second position of use.

Referring now to the drawings, the citrus fruit squeezer shown comprises a cylindrical tubular body having a first body portion 1 and a second body portion 1' which is of greater diameter than that of the first body portion 1. At the free end of the first body portion 1, the rim 2 is serrated, that is it is provided with a plurality of exially extending teeth in a ring around its free end.

At the junction between the first body portion 1 and the second body portion 1' of the said tubular body there is an annular radial shoulder 10, and radially out from this extends a radial flange 4 having a peripheral axial flange 5 facing away from the serrated end 2 of the first body portion 1. Around the first body portion 1 there is located a helical element 6 positioned coaxially therewith. This helical element is loosely fixed to the radial annular shoulder 10 by means of screws 7, passing through suitable holes 8 formed in the annular shoulder 10 itself and engaging in corresponding holes 9 formed in the lower coil of the helical element 6. This connection, which obviously can be formed with other functionally equivalent means, is of loose type so as to allow sliding of the helical element for a determined distance along the first body portion 1 of the tubular element.

In use of the device described above, the citrus fruit to be squeezed is fitted onto the first body portion 1 of the tubular element by making use of the cutting action of the serrated edge 2, and then with a suitable relative rotation between the fruit and the body 1 the fruit is "screwed" onto the helical element 6, which is prevented from rotating with respect to the first body portion 1 by the two screws 7 which fix it to the radial flange 4. By then continuing with the said screwing action of the fruit, an automatic upward traction of the helical element 6 itself takes place, with a consequent compression of the fruit pulp and squeezing of the juice. The joint action of compression and squeezing, (the latter being exercised with the hand which grips the fruit itself) are such as to produce a copious outflow of juice which is conveyed directly through the apertures 3, flowing through these into the interior of the second portion 1' of the tubular body. This latter, obviously, will be inserted into a suitable collection receptacle such as, for example, a glass, onto the rim of which the citrus fruit squeezer is securely fitted by means of the said radial flange 4 and axial flange 5.

- 4 -

Claims:

1. A citrus fruit squeezer, characterised by the fact that it comprises a tubular body having a first cylindrical body portion (1) with apertures (3) in the side wall thereof, a second cylindrical body portion (1'), and a helical element (6) surrounding the said first body portion and slidable therealong between predetermined end positions defining the length of available movement of the helical element (6) along the first body portion (1).

2. A citrus fruit squeezer according to Claim 1, characterised by the fact that the said second cylindrical body portion (1') has a greater diameter than that of the first cylindrical body portin (1) and is joined thereto by an annular shoulder (10).

3. A citrus fruit squeezer according to Claim 2, characterised by the fact that at the junction between the said first and second cylindrical body portions (1,1') of the tubular body there is provided a radial flange (4) substantially coplanar with the shoulder (10).

4. A citrus fruit squeezer according to Claim 3, characterised by the fact that the said radial flange (4) has a perimetral axial flange (5) extending from the radial flange (4) towards the said second cylindrical body portion (1') of the tubular body.

5. A citrus fruit squeezer, according to any of Claims 2,3 or 4, characterised by the fact that the said helical element (6) is secured to the said radial annular shoulder (10) by means of screws (7) passing freely through suitable holes (8) formed in the radial annular shoulder (10) and threaded into corresponding holes (9) formed in the adjacent coil of the helical element (6), the holes in the annular shoulder (10) being smaller than the heads of the screws (7) so as to limit the sliding movement of the helical element (6) along the first cylindrical body portion (1) by engagement with the annular shoulder (10).

6.    A citrus fruit squeezer according to any preceding Claim, characterised in that the free end of the first cylindrical body portion (1) remote from the said second cylindrical body portion (1') is serrated.

1/1

0197009

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 512 309 (NOGER) | | A 47 J 19/02 |
| A | EP-A-0 003 956 (HOTTENROTH) | | |
| A | GB-A- 402 029 (GALLI) | | |
| A | US-A-1 885 011 (GOUDISS JR.) | | |
| A | GB-A- 410 401 (GLASGOW) | | |
| A | US-A-2 807 205 (GILMAN) | | |

--- 

**TECHNICAL FIELDS SEARCHED (Int. Cl.4)**

A 47 J

The present search report has been drawn up for all claims

| Place of search | Date of completion of the search | Examiner |
|---|---|---|
| THE HAGUE | 23-06-1986 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82